# EUROPEAN PATENT APPLICATION

(11) **EP 3 747 321 A1**
(43) Date of publication of application: **09.12.2020**
(21) Application number: 20177957.6
(22) Date of filing: 03.06.2020
(51) Int. Cl.: A47J 31/36

(54) **INFUSION ASSEMBLY FOR MACHINES FOR MAKING INFUSED BEVERAGES**

(30) Priority: 04.06.2019 IT 201900007956
(71) Applicant: Capitani S.r.l., 22070 Solbiate (CO) (IT)
(72) Inventor: CAPITANI, Gionata, 22070 Albiolo (CO) (IT)
(74) Representative: Parisi, Luigi

(57) **Abstract**

An infusion assembly for machines for preparing infused beverages, comprising a first infusing element (3) provided with at least one cavity (4) for at least partially housing a capsule (20) and a second infusing element (5) shaped to cooperate with said first infusing element in order to define, by coupling therewith, an infusion chamber (16) is described; said first infusing element (3) comprising a capsule discharge opening (15) at the end of the infusion process;
- at least one between the first (3) or the second infusing element (5) being movable between an open position wherein said second infusing element (5) is away from said first infusing element (3) and a closed position wherein said first infusing element (3) is coupled with the second infusing element (5) so that to define said infusion chamber (16);
- a capsule restraining element (10) being shaped to restrain said capsule (20) during the infusion inside the infusion chamber and during the movement from said closed position towards said open position; the restraining element is made in the second infusing element (5) and is shaped so that to allow the sliding of the capsule (20) towards said discharge opening (15) during the movement from said closed position towards said open position and in that said second infusing element (5) comprises a piston-like closing device (21) for closing said infusion chamber comprising a first mobile part (22) actuated by the pressurized water coming into the infusion chamber.

## Description

### Field of the invention

The present invention concerns the field of machines for making infused beverages, such as coffee, teas, herbal teas, chocolates, etc. starting from a capsule or pod containing an aromatic substance, and the respective infusion assemblies.

In particular, the present invention concerns an infusion assembly for machines for making infused beverages.

### Known art

The known infusion devices of coffee machines generally comprise a first infusing element usually named female infuser, shaped like a cup and comprising a cavity apt to house an infusion capsule and/or pod containing an aromatic substance, and a second element usually named male infuser, apt to close the aforesaid cavity so that to define, together with the first infusing element, an infusion chamber.

The capsule containing the aromatic substance is placed or transported into the infusion chamber until the extraction of the aromatic substance occurs with the injection of hot pressurized water into the infusion capsule and/or pod.

The infusion chamber is in communication with at least one duct for the outflow of the infused beverage, ending with a nozzle or hopper for the outflow of the beverage. Some machines for preparing infused beverages have devices for automatically extracting the capsules from the infusion assembly at the end of the delivery of the infused beverage.

The Applicant has however noted that such devices are generally present in machines wherein the infusing elements of the infusion assembly move horizontally with respect to the lying plane of the machine.

Capsule extracting devices are also known for machines wherein the infusing elements of the infusion assembly move reciprocally with respect to a vertical direction, i.e. orthogonal with respect to the lying plane of the machine itself.

The Applicant has however noted that such devices are complex and generally fixed to the female infuser, thus constructively making the infusion assembly complex and expensive to make.

The Applicant has thus addressed the problem of making an infusion assembly for machines for preparing infused beverages, which is provided with a capsule extracting device that is simple and relatively economical to make, although highly reliable.

### Summary of the Invention

Thus, in its first aspect, the invention concerns an infusion assembly for machines for preparing infused beverages, comprising a first infusing element provided with at least one cavity for at least partially housing a capsule and a second infusing element shaped to cooperate with said first infusing element in order to define, by coupling therewith, an infusion chamber; said first infusing element comprising a capsule discharge opening at the end of the infusion process;
- at least one between the first or the second infusing element being movable between an open position, wherein said second infusing element is away from the first infusing element, and a closed position, wherein the first infusing element is coupled with the second infusing element so that to define the infusion chamber;
- a capsule restraining element shaped to restrain the capsule during the infusion inside the infusion chamber and during the movement from the closed position towards the open position;
characterized in that the restraining element is made in the second infusing element and is shaped so that to allow the sliding of the capsule towards the discharge opening during the movement from the closed position towards the open position and in that the second infusing element comprises a piston-like closing device for closing said infusion chamber comprising a first mobile part actuated by the pressurized water coming into the infusion chamber.

In the aforesaid aspect, the present invention can have at least one of the preferred characteristics described hereunder.

Preferably, the closing device comprises a second portion comprising a pressurized-water injection duct. The first portion being movable with respect to the second portion between a resting position, wherein the first portion is away from the capsule in the infusion chamber, and an operative position wherein the first portion interacts with said capsule to actuate the infusion of the beverage.

Advantageously, the movement from the resting position to the operating position of the first portion is achieved with the first and second infusing elements in a closed position.

Conveniently, the infusion assembly comprises elastic elements apt to bring back the second portion of the piston-like closing device from the operating position to the resting position at the end of the infusion.

Preferably, the first portion comprises at least one through hole for injecting pressurized water into the infusion chamber.

Conveniently, the first portion and the second portion of the piston-like closing device are mounted concentrically.

Preferably, the first portion comprises at least one perforating element to perforate the capsule.

Advantageously, the first infusing element extends along a main extension direction and has a proximal end and a distal end, the first infusing element being hinged to the second infusing element, at the distal end.

Conveniently, the first infusing element has said cavity at the proximal end. Preferably, the first infusing element has the discharge opening arranged between the cavity and the distal end.

Advantageously, the second infusing element has the piston-like closing device arranged in a position corresponding to the cavity so that, in a closed position, the piston-like closing device is arranged to close the housing cavity.

Further characteristics and advantages of the invention will become clearer in the detailed description of some preferred, but not exclusive, embodiments of an infusion assembly, in particular for machines for preparing an infused beverage according to the present invention.

### Brief description of the drawings

Such description will be set forth hereunder with reference to the accompanying drawings, only provided by way of example and thus not limiting, in which:
- figure 1 shows a schematic perspective view of an infusion assembly according to the present invention in an open position with the capsule for preparing the beverage just inserted;
- figure 2 shows a schematic perspective view of an infusion assembly according to the present invention in a closed position, during the infusion of the beverage;

- figure 3 shows a schematic perspective view of an infusion assembly according to the preset invention during the movement towards the open position with the capsule engaged with the second infusing element;
- figure 4 shows a schematic perspective view of an infusion assembly according to the present invention in an open position with the capsule disengaged from the second infusing element and falling into the discharge opening;
- figure 5 shows a schematic side and sectional view of an infusion assembly according to the present invention in a closed position, with the first portion of the second infusing element in a resting position; and
- figure 6 shows a schematic side and sectional view of an infusion assembly according to the present invention in a closed position, with the first portion of the second infusing element in an operative position.

### Detailed description of embodiments of the invention

With reference to the figures, an infusion assembly, in particular for machines for preparing an infused beverage by means of a capsule 20 containing an aromatic substance, according to the present invention, is denoted by the numerical reference 10.

As shown in the figures, the infusion assembly 10 comprises a first infusing element 3 provided with a housing cavity 4 for housing a capsule 20 containing a predetermined amount of preparation, preferably powdered, to obtain an infused beverage and a second infusing element 5 cooperating with the first infusing element 3 in order to define, by coupling therewith, an infusion chamber 16.

In the embodiment shown in the figures, the first infusing element 3 can be housed within a lower portion of the frame of the machine for preparing the infused beverage, whereas the second infusing element 5 can be housed within an upper portion of the frame of the machine.

The second infusing element 5 is movable between a closed or operating position, in which it cooperates with the first infusing element 3 in order to define, by coupling therewith, the infusion chamber 16, whereas the first infusing element is fixed.

In the embodiment shown in the figures, the first 3 and the second 5 infusing elements are hinged at one of their ends.

In particular, the first infusing element 3 extends along a main extension direction X-X and has a proximal end 8 and a distal end 9. The first infusing element 3 is hinged to the second infusing element 5 at its distal end 9.

The second infusing element 5 also extends along a main extension direction Y-Y and has a proximal end 13 and a distal end 14. The second infusing element 5 is also hinged to the first infusing element 3 at its distal end 14.

According to the present invention, proximal end of the first, respectively second, infusing element 3,5 means the end of the first, respectively of the second, infusing element 5 closer to the user, when the infusion assembly 10 is assembled within the respective machine for preparing infused beverages. Such distance being measured on the main extension direction X-X of the first infusing element 3.

Similarly, distal end of the first, respectively of the second, infusing element 3,5 means the end of the first, respectively of the second, infusing element 3,5 further away or distant from the user, when the infusion assembly 10 is assembled within the respective machine for preparing infused beverages. Such distance being measured on the main extension direction X-X of the first infusing element 3.

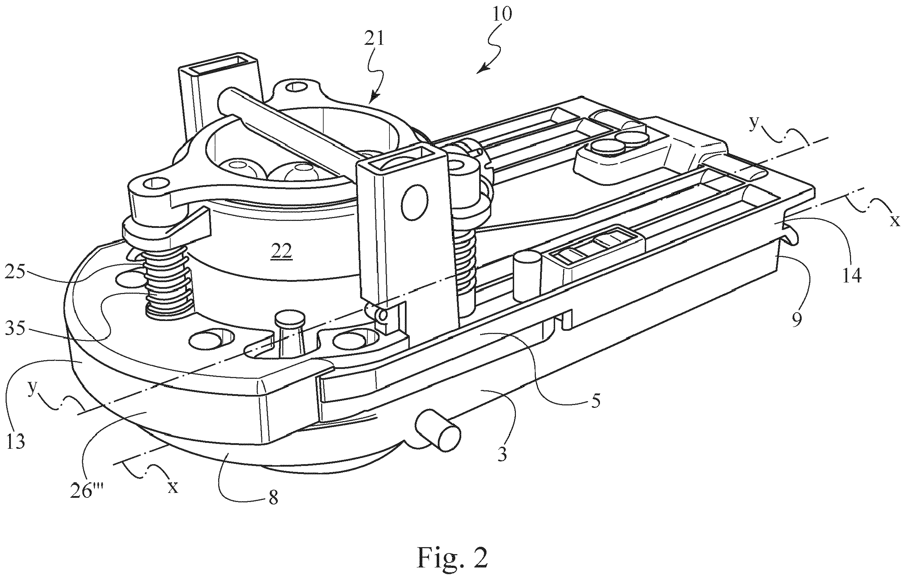

The two main extension directions X-X and Y-Y, respectively of the first and second infusing elements 3, 5, are parallel, when the first 3 and the second 5 infusing element are in a closed position shown for example in figure 2.

In the embodiment shown in the figures, the first infusing element 3 has the housing cavity 4 for housing the capsule 20 at its proximal end 8 but away from the outer edge, and a discharge opening 15 of the capsule 20 in a substantially intermediate position between the housing cavity 4 and the distal end 9.

In the embodiment shown in the figures, the housing cavity 4 is cup-shaped with a substantially circumferential cross section.

In the embodiment shown in the figures, the discharge opening 15 also has a substantially circumferential cross section, with a diameter greater than the diameter of the capsule 20, so that to favor the ejection of the capsule 20 from the infusion assembly 10 towards a collection compartment, not shown in the figures, generally placed within the machine for preparing infused beverages, under the infusion assembly 10.

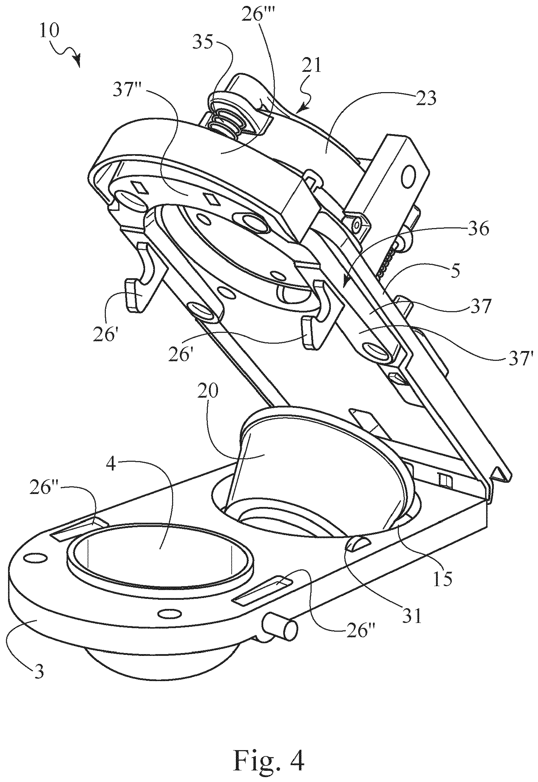

At the end of the infusion process, the capsule 20 slides towards the discharge opening 15 from which it will be ejected, as described in more detail hereunder, during the movement of the second infusing element 5 towards the open position shown in figure 4.

Advantageously, the infusion assembly 10 has a locking device 26 to keep the first infusing element 3 engaged with the second infusing element 5.

The locking device is shaped so that to snap lock the first infusing element 3 with the second infusing element 5 during the movement from said open position to said closed position.

In particular, the locking device is shaped so that to snap lock the first infusing element 3 with the second infusing element 5, when the second infusing element 5 is almost close to the first infusing element 3 or is in the closed position.

Always with reference to the embodiment shown in the figures, the locking device 26 consists of two hooked portions 26' integral with the second infusing element 5 and shaped to be engaged into two corresponding seats 26" provided in the first infusing element 3.

The two hooked portions 26' are arranged on the second infusing element 5 at its proximal portion 13 and in particular outside of the piston-like closing device 21.

The two corresponding seats 26" are arranged on the proximal end 8 of the first infusing element, in a diametrically opposite and outer position with respect to the housing cavity 4. In detail, the two corresponding seats 26" are arranged in positions corresponding to the two hooked portions 26'.

Once the user's manual action has ceased, the two hooked portions 26' return to their position thanks to two elastic elements, such as two helical springs not shown in the figures.

To be decoupled from the two corresponding seats 26", the two hooked portions 26' must be pushed to translate towards the distal end 14 of the second infusing element 5 by the manual actuation of a lever 26'" arranged frontally at the proximal end 13 of the second infusing element 5, by the user.

The second infusing element 5 has a piston-like closing device 21 for closing the infusion chamber.

The piston-like closing device 21 has a first portion 22 and a second portion 23 of which at least one is movable if actuated by the pressurized water coming into the infusion chamber 16 to hermetically close the infusion chamber 16.

In detail, with reference to the embodiment shown in the figures, the first portion 22 is movable with respect to the second portion 23.

The first portion 22 is mounted concentrically and, at least partially, outside the second portion 23 and can be translated with respect to it.

A decoupling chamber 27 is created between the first and second portions 22,23 during the movement of the first portion 22 with respect to the second portion 23.

At least one sealing member, such as an O-ring gasket, is provided between the first and second portions 22,23 so that to prevent the outflow of pressurized water coming into the decoupling chamber 27. Preferably, two sealing members 28 of the O-ring type are provided arranged between the first and second portions 22,23.

The movement of the first portion 22 with respect to the second portion 23 occurs only with the first 3 and the second 5 infusing elements in the closed position. In other words, if the second infusing element 5 is not in the closed position with the first infusing element 3, no pressurized water is delivered into the chamber 27, thus not allowing the latter to expand and consequently not allowing the first portion 22 to be lowered towards the capsule 20.

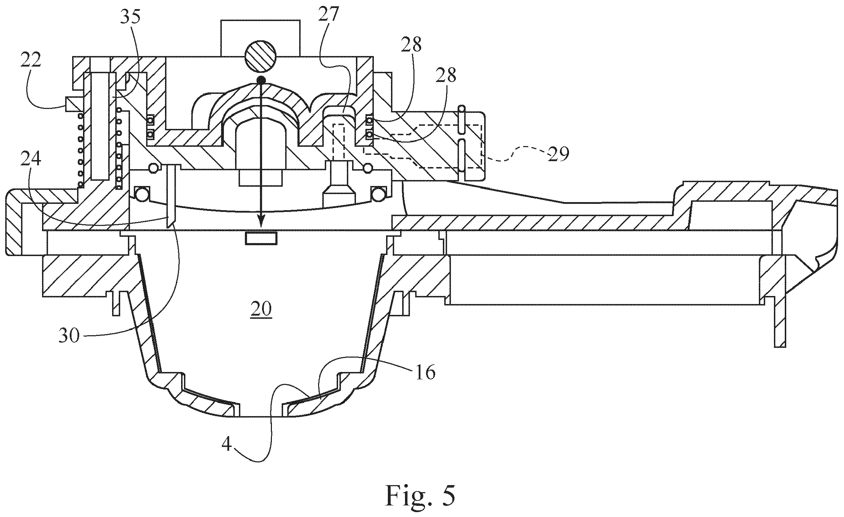

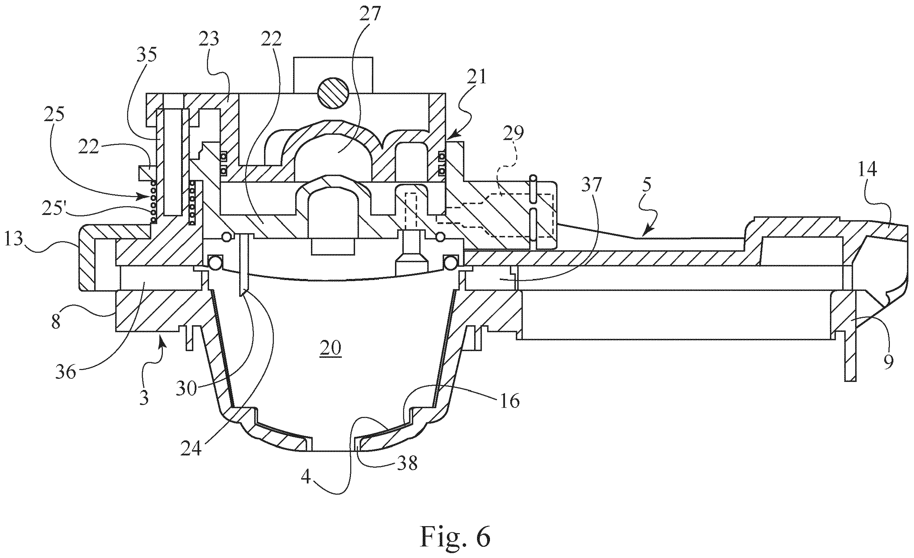

In particular, the first portion 23 is movable with respect to the second portion 22 between a resting position shown in figure 5, wherein the first portion 22 is away from the capsule 20 in the infusion chamber 16, and an operative position shown in figure 6, wherein the first portion 22 interacts with the capsule 20 for infusing the beverage. In particular, in the operative position, the first portion 22 is lowered, thus allowing a perforating element 24 to perforate the capsule 20 and initiating the injection of pressurized water into the capsule 20.

In the resting position, the first portion 22 is raised so that to allow the perforating element 24 to disengage from the capsule 20, thus allowing the sliding of the capsule 20 towards the discharge opening 15 guided by the restraining element 36. Moreover, the infusion assembly 10 advantageously comprises elastic elements 25 apt to bring back the first portion 22 of the piston-like closing device 21 from the operative position to the resting position at the end of the infusion.

In the embodiment shown in the figures, three helical springs 25', each arranged on an upright 35 extending between the second portion 23 and the second infusing element 5, are present as elastic elements 25, the first portion 22 of the piston-like closing device 21 abutting against the helical springs 25' so that to be pushed by them towards the resting position.

The first portion 22 of the piston-like closing device 21 comprises a water injection duct 29 to inject pressurized water into the chamber 27.

The water injection duct 29 is in fluidic communication with the chamber 27 and with a water tank not shown in the figures.

Moreover, the first portion 22 comprises at least one through hole 30 for injecting the pressurized water into the infusion chamber 16.

In the embodiment shown in the figures, the through hole is made by the same perforating element 24, the perforating element 24 is in fact, in this case, a hollow cannula 24' with a free end shaped to form a cutting edge. The cannula 24' thus performs both the function of perforating the capsule 20 and of a through hole for the supply of the pressurized water into the capsule 20 and into the infusion chamber 16. Moreover, the infusion assembly 10 has a safety device configured to prevent the injection of pressurized water into the decoupling chamber 27 and into the infusion chamber 16.

The safety device can for example consist of a position sensor 31 arranged on the first infusion element 3 and configured to detect the position of the second infusing element 5 with respect to the first infusing element 3.

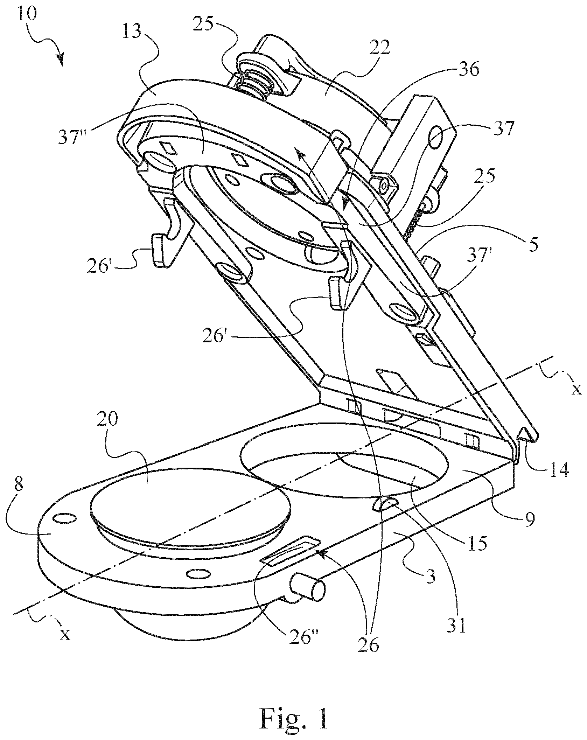

In other words, when the second infusing element 5 is in the open position shown in figures 1,3,4, the position sensor 31 signals a control unit to stop the inflow of pressurized water into the decoupling chamber 27, vice-versa, when the second infusing element 5 is in the closed position shown in figures 2,5,6, the position sensor 31 signals a control unit that it is possible, if required, to supply the inflow of pressurized water into the decoupling chamber 27 and consequently into the infusion chamber 16.

Moreover, the infusion assembly 10 has a restraining element 36 to restrain the capsule 20, shaped to restrain the capsule 20 during the infusion inside the infusion chamber 16 and during the movement from the closed position towards the open position of the second infusing element 5.

The restraining element 36 is made in the second infusing element 5 and is shaped so that to allow the sliding of the capsule 20 towards the discharge opening 15 during the movement from the closed position towards the open position of the second infusing element 5.

The restraining element 36 consists of a flat element 37 spaced from the abutment surface 32 of the second infusing element 5.

The restraining element 36 is arranged spaced with respect to the abutment surface 32 such as to allow the trapping of the annular flange of the capsule 20 between the restraining element and the abutment surface 32.

In the embodiment shown in the figures, the restraining element 36 is "U-shaped" with the two legs 37' of the "U" arranged to the side of the housing cavity 4 and with the arched portion 37" of the "U" arranged at the proximal portion 13 of the second infusing element 5.

The capsule 20, containing a predetermined amount of preparation for preparing an infused beverage, for example coffee, is inserted in the housing cavity 4 during the operation of the machine for preparing the infused beverage, with the first and the second infusing elements 3,5 arranged in the open position of fig. 1.

At this point, the second infusing element 5 is lowered onto the first infusing element 3. The first portion 22 of the piston-like closing device 21 is thus lowered to interact with the capsule 20.

In other words, the control unit controls the supply of the pressurized water coming into the decoupling chamber 27, the inflow of pressurized water involves the lowering of the first portion 22 of the piston-like closing device 21. By being lowered, the first portion 22 abuts against the upper portion of the capsule 20, the perforating element 24 perforates the capsule 20 thus injecting pressurized water into the capsule 20, then resulting in the infusion of the beverage and consequently in the preparation of the infused beverage which at this point is delivered by the duct 38 into a cup below, not shown in the figures.

For the delivery of the infused beverage, the infusion assembly 10 can be open when the control unit stops the supply of hot pressurized water to the decoupling chamber 27. In other words, the second infusion assembly 5 can rotate and move away from the first infusion assembly 3.

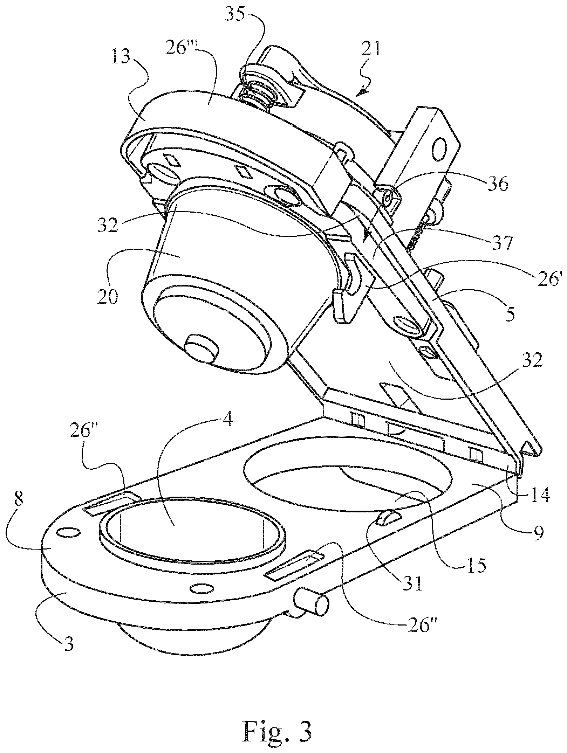

During the movement from the closed position, figure 2, towards the open position, figure 3, the restraining element 36 and the perforating element restrain the capsule 20, thus keeping it substantially integral with the second infusing element 5 and extracting it from the housing cavity 4.

After the perforating element has been disengaged from the capsule 20, as the second infusing element 5 is gradually raised, the capsule 20 slides by gravity between the restraining element 36 and the abutment surface 32 up to be disengaged from the same restraining element 36.

At this point, the capsule 20 falls into the appropriate discharge opening 15 from which it will be ejected towards a collection compartment, not shown in the figures, generally placed within the machine for preparing infused beverages, under the infusion assembly 10.

Several changes can be made to the embodiments described in detail, anyhow remaining within the protection scope of the invention, defined by the following claims.

## Claims

1. Infusion assembly for machines for preparing infused beverages, comprising a first infusing element (3) provided with at least one cavity (4) for at least partially housing a capsule (20) and a second infusing element (5) shaped to cooperate with said first infusing element in order to define, by coupling therewith, an infusion chamber (16); said first infusing element (3) comprising a capsule discharge opening (15) at the end of the infusion process;
- at least one between the first (3) or the second infusing element (5) being movable between an open position wherein said second infusing element (5) is away from said first infusing element (3) and a closed position wherein said first infusing element (3) is coupled with the second infusing element (5) so that to define said infusion chamber (16);
- at least one capsule restraining element (36) shaped to restrain said capsule (20) during the infusion inside the infusion chamber and during the movement from said closed position towards said open position;
**characterized in that** said restraining element is made in said second infusing element (5) and is shaped so that to allow the sliding of said capsule (20) towards said discharge opening (15) during the movement from said closed position towards said open position and **in that** said second infusing element (5) comprises a piston-like closing device (21) for closing said infusion chamber comprising a first mobile part (22) actuated by the pressurized water coming into the infusion chamber.

2. Infusion assembly (10) according to claim 1, **characterized in that** said closing device (21) comprises a second portion (23) comprising a pressurized water injection duct; said first portion (22) being movable with respect to the second portion (23) between a resting position wherein said first portion (22) is away from the capsule (20) in the infusion chamber and an operative position wherein said first portion (22) interacts with said capsule (20) for infusing the beverage.

3. Infusion assembly (10) according to claim 2, **characterized in that** the movement from the resting position to the operating position of said first portion (22) is achieved with said first (3) and second (5) infusing elements in a closed position.

4. Infusion assembly (10) according to claim 2, **characterized by** comprising elastic elements (25) apt to bring the second portion back from the operating position to the resting position at the end of the infusion.

5. Infusion assembly (10) according to any one of claims 1 to 4, **characterized in that** said first portion (22) comprises at least one through hole for injecting pressurized water into the infusion chamber (16).

6. Infusion assembly (10) according to any one of claims 2 to 5, **characterized in that** said first portion (22) and said second portion (23) are mounted concentrically.

7. Infusion assembly (10) according to claim 2, **characterized in that** said first portion (22) comprises at least one perforating element (24) to perforate said capsule (20).

8. Infusion assembly (10) according to any one of the preceding claims, **characterized in that** said first infusing element (3) extends along a main extension direction (X-X) and has a proximal end (8) and a distal end (9), said first infusing element (3) being hinged to said second infusing element (5), at said distal end (9).

9. Infusion assembly (10) according to claim 8, **characterized in that** said first infusing element (11) has said cavity (4) at said proximal end (8).

10. Infusion assembly (10) according to claim 8, **characterized in that** said first infusing element (3) has said discharge opening (15) arranged between said cavity (4) and said distal end (9).

11. Infusion assembly (10) according to claim 8, **characterized in that** said second infusing element (12) has said closing device (21) arranged in a position corresponding to said cavity (4) so that, in a closed position, the closing device (21) is arranged to close said cavity (4).

12. Infusion assembly (10) according to claim 1, **characterized by** comprising a locking device (26) to keep the first infusing element (3) engaged with the second infusing element (5); said locking device (26) being shaped so that to snap lock the first infusing element (3) with the second infusing element (5) during the movement from said open position to said closed position.
